Europäisches Patentamt

European Patent Office

Office européen des brevets

(11) Publication number: 0 298 613
A1

# EUROPEAN PATENT APPLICATION

(21) Application number: 88305354.8

(22) Date of filing: 10.06.88

(51) Int. Cl.⁴: H04N 9/64 , H04N 9/78

The title of the invention has been amended (Guidelines for Examination in the EPO, A-III, 7.3).

(30) Priority: 10.06.87 GB 8713531

(43) Date of publication of application:
11.01.89 Bulletin 89/02

(84) Designated Contracting States:
DE FR GB

(71) Applicant: QUESTECH LIMITED
Eastheath Avenue
Wokingham Berkshire RG11 2PP(GB)

(72) Inventor: Barton, Nicholas
11 Cherry Tree Grove
Wokingham Berkshire(GB)

(74) Representative: Bubb, Antony John Allen et al
GEE & CO. Chancery House Chancery Lane
London WC2A 1QU(GB)

(54) Colour television decoding apparatus.

(57) A comb fail protection means that is particularly economic when implemented using digital circuits comprises a filter, e.g. a so-called digital transversal filter capable of responding to the "vertical frequency" of a television signal.

Such a filter comprises a plurality of delay means (2 - 5) for processing a colour television signal to produce a plurality of signals delayed by substantially integer line periods. The relatively time displaced output signals are multiplied by appropriate factors in multipliers (6 - 10) and the outputs of the multipliers are summed in a summer (11) to provide a corresponding comb fail signal that can be utilised to adapt the architecture of a colour television decoding circuit.

FIG 3

## IMPROVEMENTS IN AND RELATING TO COLOUR TELEVISION DECODING APPARATUS

This invention concerns improvements in and relating to colour television decoding apparatus.

Many occasions exist in television signal processing where the composite signal must be decoded into its baseband luminance and chrominance components. In order to improve the degree of separation between these recovered signals, various techniques have been developed, most notably a range of decoders which use the average of several lines of the video signal and are commonly called comb decoders. The operation of this class of decoders relies on exact correlation of baseband signals in a vertical direction and the performance is degraded where this is not the case. As a result, various methods of comb fail detection have been proposed to allow the decoder architecture to be dynamically modified to one which does not suffer from the same restriction in performance.

Known techniques, for example as shown in GB 2 067 872A, are designed to exploit the difference in amplitude, or phase, or both, between distinct lines of video.

It is an object of the present invention to provide a new type of comb fail protection means and preferably one which can be particularly economic when implemented using digital circuits.

The present invention makes use of the fact that the failure of a comb filter decoder is related to the vertical frequency of a television picture signal. By the "vertical frequency" of a television signal is meant that frequency which would be obtained by scanning a given part of the television raster in the vertical, rather than the horizontal direction.

In accordance with the invention, therefore, a comb fail detection circuit includes means responsive to change in the vertical frequency detected over a predetermined number of lines of the picture signal, for providing a corresponding comb fail detection signal.

Sampling of the vertical frequency of the colour television signal may be effected by means of an appropriate vertical filter that is arranged to reject vertical frequencies in the region of baseband luminance and chrominance. Such a vertical filter may comprise delay means for processing the colour television signal to produce a plurality of signals delayed by substantially integer line periods, multiplying means to produce proportions of each of the said delayed signals, and summing means to sum together the corresponding proportions of said plurality of delayed signals. A comb fail detection signal may be derived from the summing means by envelope detecting the output signal and low pass filtering the detected signal to remove high frequency components.

The invention is illustrated by way of example in the accompanying drawings, in which:

Figure 1 is a diagram illustrating the vertical, horizontal frequency spectrum of a typical PAL colour television signal,

Figure 2 is a similar view showing the corresponding frequency spectrum of a typical NTSC colour television signal,

Figure 3 is a block circuit diagram of one embodiment of comb fail detector circuit in accordance with the invention,

Figure 4 is a block circuit diagram of an adapt control circuit for modifying the output signal of the circuit control of Fig. 3,

Figure 5 is a similar view of an enhancement circuit for further modifying the output of Fig. 4,

Figure 6 is a block of a correlating circuit for use with an adapt control circuit such as shown in Fig. 4 possibly enhanced with the circuit of Fig. 5, and

Figure 7 is a block circuit diagram of a comb filter circuit incorporating a fail detector in accordance with the invention.

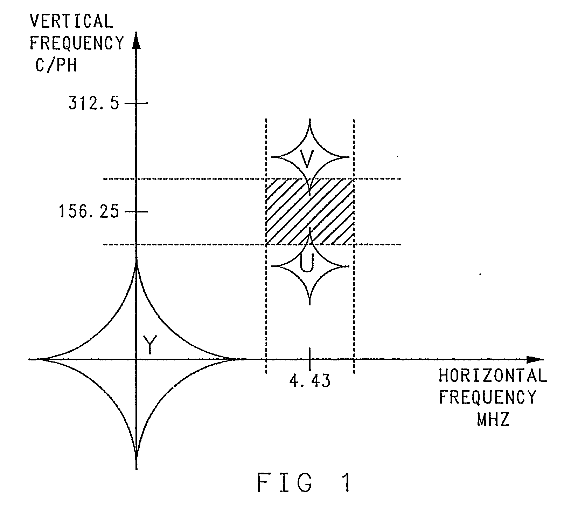

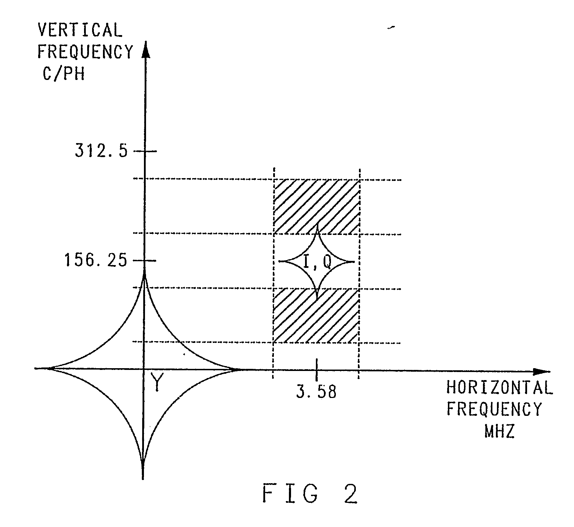

Referring to Figs. 1 and 2 of the drawings, it will be noted that the spectrum shown in each figure is indicated in terms of the frequency of the composite colour television signal as shown on the horizontal axis, and the vertical frequency of the corresponding colour television picture indicated on the vertical axis as cycles per picture height. The comb filter fails as the vertical frequency chrominance increases, or as the vertical frequency components of luminance increase for diagonal luminance with horizontal frequencies in the region of the colour subcarrier. This increase in vertical frequency can be detected according to the invention by means of a suitably profiled vertical filter operating in the region of the colour subcarrier horizontally, and away from the centres of zero frequency baseband luminance and chrominance components. This is shown by the shaded areas in Fig. 1 and Fig. 2.

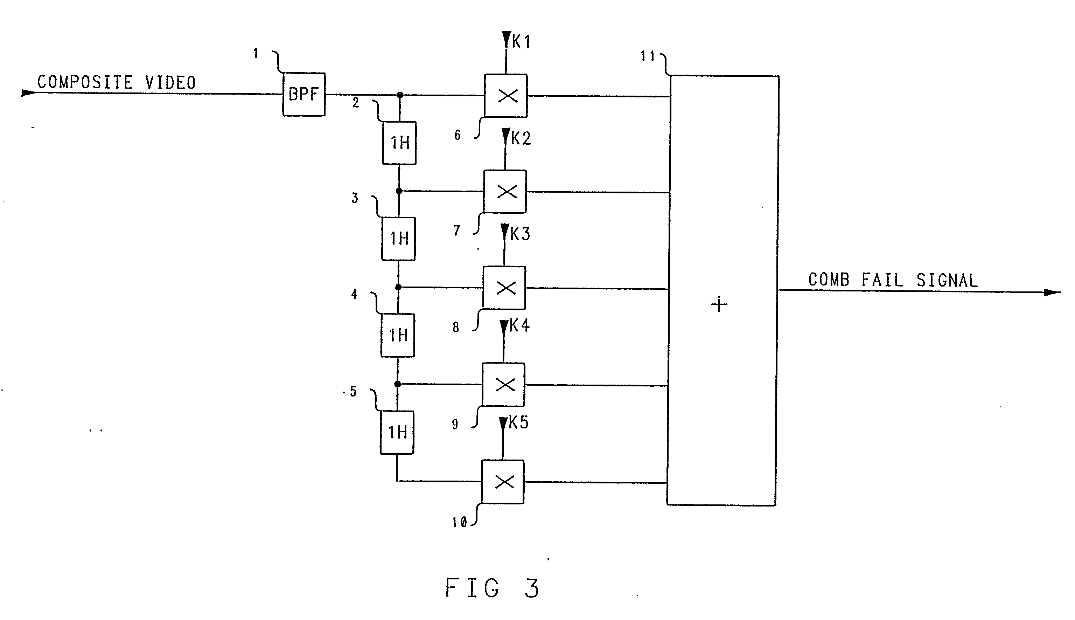

Referring to Fig. 3 one embodiment of comb fail detector according to the invention employing a vertical transversal filter comprises a horizontal band-pass filter 1 arranged to receive the video signal and to the output of which are coupled a series of one-line delay circuits 2, 3, 4 and 5 to provide five signals with a line of delay between each. A proportion defined by k1 to k5 of each delayed signal is generated by multipliers 6, 7, 8, 9 and 10 and added together by a summer 11. The amplitude of the various proportions is decided by the required vertical frequency profile and may be determined in known manner as will be understood by one skilled in the art of digital transversal filtering. It will be appreciated that the ability of the detector to discriminate between wanted and unwanted signals is primarily a function of the vertical filter, and to this end different proportions of the delayed signals may be used and even extended to use many additional line-delayed signals. Practical considerations will usually determine the total number of lines and proportions used. The remainder of the present description relates to the use of four line delays to provide five different vertical signals and application to the PAL system. The proportions for a PAL system may be,

$$k1 = k5 = 1/2$$
$$k2 = k4 = -1$$
$$k3 = 1,$$

These values being chosen to give the required frequency response and to afford an economic implementation.

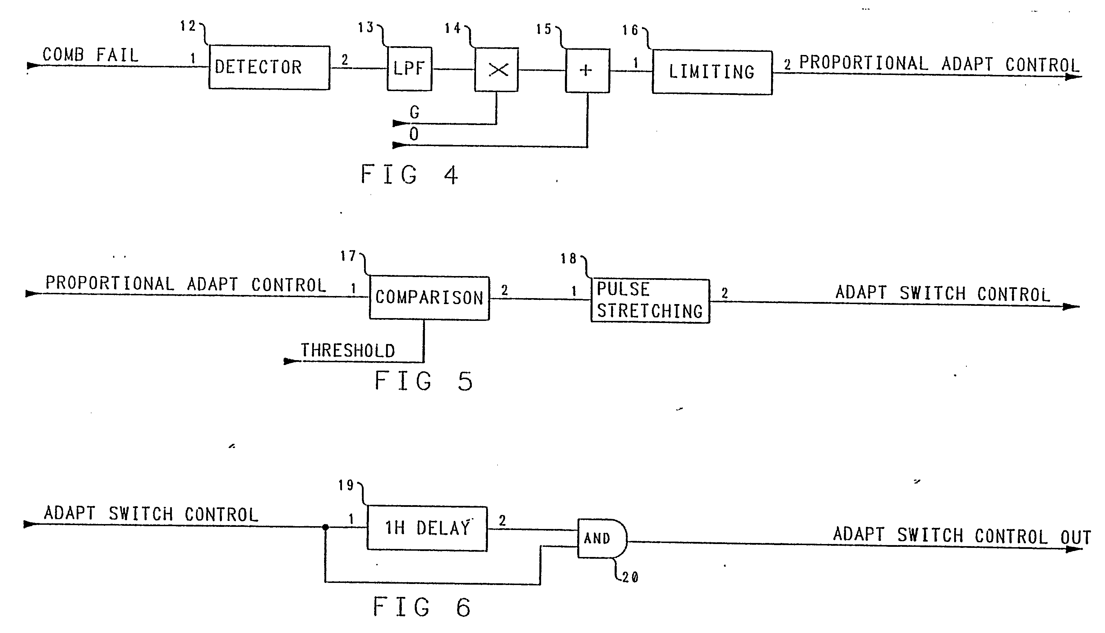

The comb fail output from the summer 11 consists of a high frequency signal whose amplitude varies with the degree of comb failure. In order to control how the decoder is adapted, this signal is input to an adapt control circuit of which one possible embodiment to produce a proportional adaption is shown in Fig.4 the comb fail signal is input to an envelope detector 12 and low pass filter 13. The resulting signal is multiplied by the gain factor G by means of a multiplier 14, and an offset O added by summer 15. The output of the summer 15 is fed to a limit circuit 16 to maintain the range of the signal within that dictated by the following circuits (not shown) that cause the decoder architecture to be adapted. The rate and point at which the adaption occurs is set by means of the two parameters G and O respectively.

A possible addition to the adapt control circuit of Fig. 4 is shown in Fig. 5 where a proportional adapt signal is not required. The output of limiter 16 is input to a comparison circuit 17 to produce an output when the amplitude of the comb fail signal exceeds a threshold. The short pulse so produced is input to a pulse lengthening circuit 18 to provide a signal which causes the decoder to be switched to a different architecture.

Preferentially the adapt control signals generated by the adapt control means are correlated across several lines to produce an adapt control signal that is not over as many lines. This may be important when the number of lines used to form the comb fail detect signal exceeds the number of lines used in the comb decoder in which case the comb fail signal will occur in more lines than that in which failure actually occurs. The correlator circuit of Fig. 6 will produce an output only when a failure has been detected on at least two adjacent lines. The adapt control signal is input to a delay means 19 to produce a second signal substantially delayed by one line. These two signals are then compared by the gate 20 to produce a third signal when both the first and second signals indicate that the decoder should adapt.

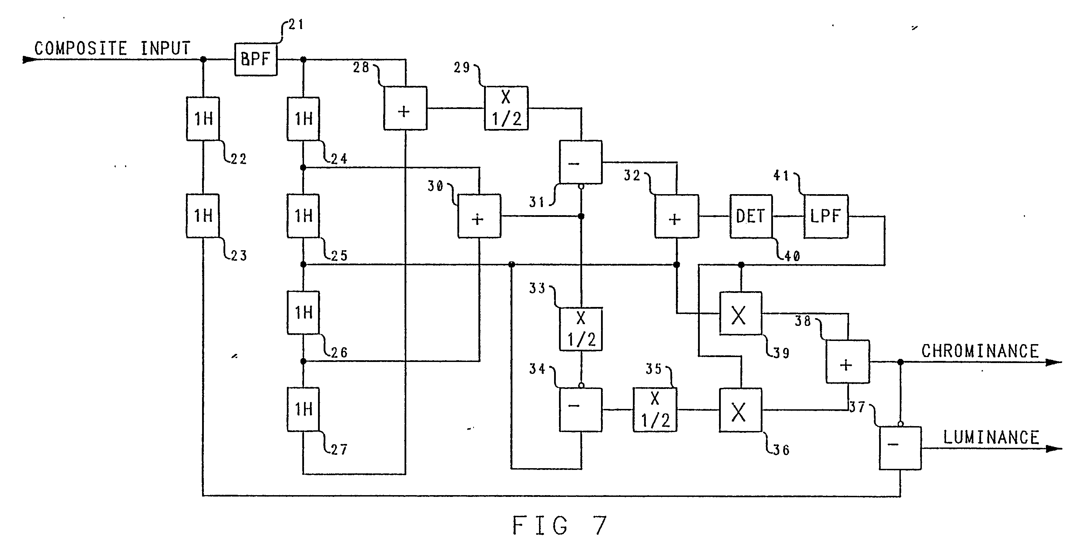

Referring to Fig. 7 a further embodiment of the invention is shown employing a PAL decoder type which is particularly economic as some functions are common to both decoder and comb fail detector and the proportions chosen for the vertical filter are fractional powers of two. The composite signal is applied to band pass filter 21 to produce a second signal comprising chrominance and high frequency luminance. Line delay means 24, 25, 26 and 27 produce third, fourth, fifth and sixth signals substantially delayed by one, two, three and four line periods respectively. The said second and sixth signals are averaged by summer 28 and halved by multiplier 29 to produce a seventh signal. The third and fifth signals are added in summer 30 to provide an eighth signal. The said eighth signal is subtracted in subtractor 31 from the seventh signal to produce a ninth signal. The fourth signal is added to the ninth signal in summer 32 to produce a tenth signal which is the comb fail signal. This is envelope detected by detector 40 and low pass filtered by filter 41 to produce an eleventh signal proportional to the degree of the comb failure and scaled to have a range of zero to one. The said eighth signal, substantially luminance for low vertical frequencies, is halved by multiplier 33 then subtracted from the fourth signal in subtractor 34 to produce a twelfth signal at the output of multiplier 35 substantially of chrominance delayed by two line periods. A proportion (1-k) of this twelfth signal formed by multiplier 36 is added to a proportion (k) formed by multiplier 39 of the said fourth signal by summer 38. This thirteenth signal is thus varied between combed chrominance and a simple bandpassed chrominance in acoord with the degree of comb failure. This thirteenth signal is subtracted from the first signal delayed by two line periods by delay means 23 and 23 in subtractor 32 to produce a fourteenth signal comprising substantial luminance.

It will be appreciated that minor changes to the vertical filter and substituting an NTSC decoder for PAL decoder will allow the invention to be used on NTSC type television signals.

## Claims

1. A comb fail detection circuit for incorporation in a colour television apparatus, comprising means (2-11) responsive to a change in the vertical frequency of a colour television signal detected over a predetermined number of lines of the picture signal, for providing a corresponding comb fail detection signal.

2. A comb fail detection circuit according to Claim 1, wherein said responsive means comprises a vertical filter (2-11) arranged to reject frequencies in the region of baseband luminance and chrominance.

3. A comb fail detection circuit according to Claim 2, wherein said filter comprises delay means (2-5) for processing the colour television signal to produce a plurality of signals relatively delayed by substantially integer line periods, multiplying means (6-10) for producing proportions of each of the relatively delayed signals, and summing means (11) for summing together the correspondingly proportioned delayed signals.

4. A comb fail detection circuit according to Claim 3, further comprising means (12) for envelope detecting the output signal of said summing means and means (13) for low pass filtering the detected signal to remove high frequency components.

5. A comb fail detection circuit according to any one of Claims 1-4 , further comprising a threshold level detecting circuit (17) for producing an output signal when the amplitude of the comb fail detection signal exceeds a given threshold.

6. A comb fail detection circuit according to any one of Claims 1-4 or 5, including means (19,20) for correlating the comb fail detection signal over a plurality of lines of the television signal whereby an output signal is produced in response to generation of a comb fail signal in a plurality of adjacent lines of the television signal.

7. A comb fail detection circuit according to Claim 6, wherein said correlating means comprises means (19) for delaying said comb detection signal by one line period, and an AND gate (20) having signal inputs connected respectively to the input and the output of said delay means (19).

8. A comb fail detection circuit as claimed in any one of Claims 1 - 4 in combination with a colour television decoding circuit, comprising a band pass filter (21) arranged to receive a composite television signal and provide an output signal comprising chrominance and high frequency luminance, first (24), second (25), third (26), and fourth (27) line delay means coupled to the output of said bandpass filter (21) and arranged to provide signals delayed by one, two, three and four line delay periods respectively, means (28,29) for averaging the outputs of said bandpass filter (21) and said fourth delay means (27), first adding means (30) for adding the output signals of said first (24) and third (26) delay means, first subtracting means (31) for subtracting the output signal of said first adding means (30) from the output signal of said averaging means (29), and second adding means (32) for adding the output signals of said second delay means (25) and said first subtracting means (31) in order to provide a comb fail signal.

9. The combination of Claim 8, further comprising means (33) for halving the output signal of said first adding means (30) and second subtracting means (34) for subtracting the output signal of said halving means (33) from the output signal of said second delay means (25) to provide a combed chrominance signal.

10. The combination of Claim 9 when appended to Claim 4, including first (36) and second (39) multiplying means for multiplying the output signals of said second subtracting means (34) and said second delay means (25) respectively, and third adding means (38) for adding the output signals of said first and second multiplying means (36,39), the multiplication factors of said first and second multiplying means (36.39) being arranged to vary in inverse relation and in accordance with the magnitude of the comb fail signal, whereby the output signal of said third adding means (38) is caused to vary between combed chrominance and simple bandpassed chrominance in accordance with the degree of comb failure.

FIG 1

FIG 2

EP 0 298 613 A1

FIG 3

EP 0 298 613 A1

COMB FAIL $\xrightarrow{\quad 1 \quad}$ | DETECTOR | $\xrightarrow{\quad 2 \quad}$ | LPF | $\xrightarrow{\quad}$ | $\times$ | $\xrightarrow{\quad}$ | $+$ | $\xrightarrow{\quad 1 \quad}$ | LIMITING | $\xrightarrow{\quad 2 \quad}$ PROPORTIONAL ADAPT CONTROL

12    13    14    15    16

G

0

## F I G  4

PROPORTIONAL ADAPT CONTROL $\xrightarrow{\quad 1 \quad}$ | COMPARISON | $\xrightarrow{\quad 2 \quad}$ $\xrightarrow{\quad 1 \quad}$ | PULSE STRETCHING | $\xrightarrow{\quad 2 \quad}$ ADAPT SWITCH CONTROL

17    18

THRESHOLD

## F I G  5

ADAPT SWITCH CONTROL $\xrightarrow{\quad 1 \quad}$ | 1H DELAY | $\xrightarrow{\quad 2 \quad}$ | AND | $\xrightarrow{\quad}$ ADAPT SWITCH CONTROL OUT

19    20

## F I G  6

EP 0 298 613 A1

FIG 7

## DOCUMENTS CONSIDERED TO BE RELEVANT

EP 88305354.8

| Category | Citation of document with indication, where appropriate, of relevant passages | Relevant to claim | CLASSIFICATION OF THE APPLICATION (Int. Cl 4) |
|---|---|---|---|
| A | EP - A2 - 0 221 769 (RCA)  <br> * Abstract; column 1, lines 3-38; fig. 1-3 *  <br> -- | 1,3,8 | H 04 N 9/64 <br> H 04 N 9/78 |
| A | US - A - 4 050 084 (ROSSI)  <br> * Abstract; fig.; column 4, line 4 - column 7, line 13 *  <br> ---- | 1,3,8 | |

TECHNICAL FIELDS
SEARCHED (Int. Cl.4)

H 04 N 9/00

The present search report has been drawn up for all claims

| Place of search | Date of completion of the search | Examiner |
|---|---|---|
| VIENNA | 07-09-1988 | BENISCHKA |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82